# EUROPEAN PATENT APPLICATION

(11) **EP 1 289 036 A1**
(43) Date of publication of application: **05.03.2003**
(21) Application number: 01932324.5
(22) Date of filing: 29.05.2001
(51) Int. Cl.: H01M 8/02, H01M 8/10, H01M 4/86

(54) **FUEL CELL**

(30) Priority: 30.05.2000 JP 2000016055
(71) Applicant: SANYO ELECTRIC CO., LTD., Moriguchi-shi, Osaka 570-0083 (JP)
(72) Inventor: YASUO, Takashi, Ashikaga-shi, Tochigi 326-0067 (JP); SUZUKI, Shuuichi, Oura-gun, Gunma 370-0517 (JP); CHIKANO, Yoshito, Oura-gun, Gunma 370-0532 (JP); YONEZU, Ikuo, Hirakata-shi, Osaka 573-0084 (JP)
(74) Representative: Glawe. Delfs. Moll
(86) International application number: JP0104505
(87) International publication number: WO01093356

(57) **Abstract**

A fuel cell is provided that includes a polymer electrolyte membrane having a cathode and a gas diffusion layer arranged in this order on one surface, and an anode and another gas diffusion layer arranged in this order on its other surface. Recently, various methods of retaining moisture produced near the cathode have been adopted to ensure proper humidification and ion conductivity within the membrane. However, under certain operating conditions, conventional fuel cells allow excessive amounts of moisture to evaporate and escape into the oxidizing gas, causing the membrane to dry up. This fuel cell was designed to solve such problems by including a first and second layer within the cathode-side gas diffusion layer. The first layer is in contact with the cathode, and the second layer, which is thicker than the first layer, is the layer along which oxidizing gas is distributed and through which oxidizing gas is passed.

## Description

### Technical Field

The present invention relates to improved technologies for maintaining humidification and gas diffusion properties of solid polymer membranes found within fuel cells such as solid polymer electrolyte fuel cells and direct methanol fuel cells.

### Background Art

Normally, fuel cells generate electricity by means of a reaction between hydrogen and oxygen that occurs when a fuel gas including hydrogen is supplied to the anode side of the fuel cell and an oxidizing gas including oxygen is supplied to the cathode side of the fuel cell. Generally, air is used for the oxidizing gas. And for the fuel gas, either pure hydrogen or some other hydrogen-rich reformed gas made from light hydrocarbons such as natural gas or naphtha is used.

Although there are many types of fuel cells, much research during recent years has been dedicated to polymer electrolyte fuel cells (PEFCs) that use solid polymer membranes as electrolytes. An example of this would be a polymer electrolyte fuel cell that includes a cathode and an anode on either side of a polymer electrolyte membrane made of a fluoride-type cation exchange resin or the like and these further being sandwiched between two gas diffusion layers.

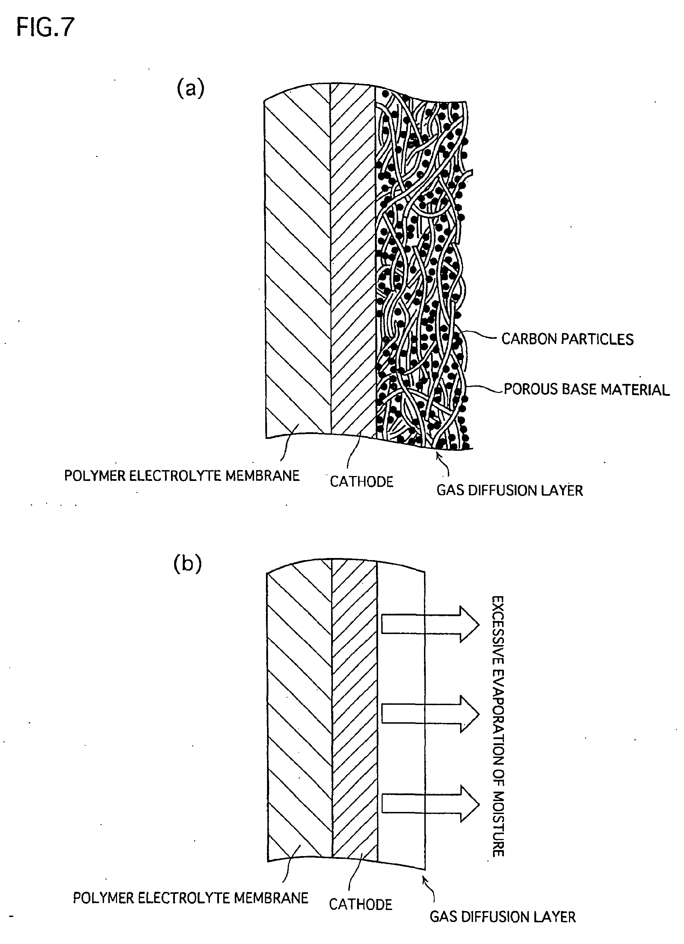

FIG. 7 (a) is a partial sectional drawing showing a polymer electrolyte membrane area, a cathode, and a gas diffusion layer. Here the gas diffusion layer comprises carbon particles adhered to cellulose-type carbon fibers or. the like. This functions to supply uniformly diffused fuel gas and oxidizing gas to the polymer electrolyte membrane (for details, refer to Japanese Laid-Open Patent Application No. H5-283082, No. H6-52864, and No. 7-78617).

Polymer electrolyte fuel cells actually in use obtain a high level of output by means of individual cells with the above-mentioned construction being stacked into multiple layers.

When polymer electrolyte fuel cells are used, it is essential that humidification be maintained in the polymer electrolyte membrane in order to increase ion conductivity and decrease internal resistance. A common method of achieving this, for example, is a humidification method that involves adding humidity to the fuel gas before it is supplied to the fuel cell. Another approach involves humidifying the polymer electrolyte membrane by retaining the moisture that naturally develops upon the output of electricity at the area where the cathode and the polymer electrolyte membrane meet.

However, with the above fuel cell construction, problems such as that illustrated in FIG. 7(b) can arise (in this diagram, the gas diffusion layer is drawn in a simplified form). That is to say that under certain operating conditions (such as when there is limited use of an oxidizing agent) the moisture that naturally develops upon the output of electricity at the area where the cathode and the polymer electrolyte membrane meet passes through the gas diffusion layer to then evaporate into the oxidizing gas. As a result, the polymer electrolyte membrane dries up and develops increased internal resistance, which then results in a decrease in the efficiency with which electricity is generated.

To counteract this it is possible to suppress the evaporation of produced moisture by increasing the amount of carbon particles attached to the carbon fibers and therefore increasing the density of the carbon fibers. This method is somewhat effective in suppressing evaporation, but there are cases in which this would be overly effective, causing excessive amounts of moisture to be retained. This can result in the pores of the gas diffusion layer (the spaces between the various carbon fibers) becoming clogged with moisture, which would lead to decreased diffusion of the gas supplied to the polymer electrolyte membrane and a decrease in the efficiency with which electricity is generated. It is particularly easy for such problems to arise when the polymer electrolyte membrane is thin (as thin as 50 µm) and has a limited water content. Therefore, it is essential to develop solutions as soon as possible.

There is definitely room for improvement in current technology for developing means for stabilizing the humidification of the polymer electrolyte membrane while maintaining gas diffusibility, despite changes in operating conditions.

### Disclosure of the Invention

Taking the above problems into consideration, it is an object of the present invention to provide a fuel cell, such as a polymer electrolyte fuel cell, that is capable of stable production of electricity by maintaining ideal gas diffusibility and polymer electrolyte membrane humidification despite changes in operating conditions.

The above object can be achieved by a fuel cell that includes an electrolyte membrane having (a) a cathode and a gas diffusion layer arranged in the stated order on one surface of the electrolyte membrane, and (b) an anode and another gas diffusion layer arranged in the stated order on the other surface of the electrolyte membrane. This fuel cell generates electricity when an oxidizing gas is distributed along and passed through the surface of the cathode-side gas diffusion layer and a fuel gas is distributed along and passed through the surface of the anode-side gas diffusion layer. Additionally, the cathode-side gas diffusion layer should be made up of a first layer in contact with the cathode, and a second layer that is thicker than the first layer. This allows for more flexibility in the capabilities of the gas diffusion layer when the oxidizing gas is distributed along its surface. Stable operation of the fuel cell can be actualized with this arrangement despite a wide range of humidification conditions and gas utilization ratios.

Concretely speaking, a cathode-side gas diffusion layer such as this can be made up of a fibrous porous material (such as carbon paper) to which conductive particles (such as carbon particles) are attached.

Note that in this case the average pore size of the second layer is greater than the average pore size of the first layer. This gives the first layer the function of retaining water and maintaining the humidification within the polymer electrolyte membrane, while the second layer, due to its comparatively large pore size, has the ability to maintain optimal gas diffusibility.

The above-mentioned "pores" refers to the spaces found between the fibers of the porous material, the spaces found between the conductive particles adhered to the fibers, or the spaces found between the fibers and the conductive particles. And the above-mentioned "average pore size" refers to an average value for the first layer and an average value for the second layer calculated from measurements of the spaces between the fibers of the porous materials, the spaces between the conductive particles adhered to the fibers, or the spaces between the fibers and the conductive particles.

The pore sizes are determined by the amount of conductive particles adhered to the fibers, and the first and second layers are formed by controlling this amount of adhered particles. The average pore size in such an arrangement can be measured by using a device such as the Shimadzu Pore Sizer 9310, which relies on a well-known mercury injection method disclosed in Japanese Laid-Open Patent Application No. H10-356447.

The carbon particles of the first layer can be made up of furnace black alone, or furnace black mixed with acetylene black, expanded graphite, fibrous graphite, or any combination thereof. And the carbon particles of the second layer can be made up of acetylene black alone, or acetylene black mixed with furnace black. Since these materials are readily available for purchase, it makes fuel cell construction easier and less costly.

When the cathode-side gas diffusion layer is constructed in this way, with the porous material containing carbon particles and water repelling resin, the following conditions are desirable for obtaining optimal results from the present invention. These findings are based on working examples.

The carbon particles found within the first layer should have an average specific surface area that ranges from 100 m²/g to 1000 m²/g, inclusive, and the carbon particles found within the second layer should have an average specific surface area of less than 100 m²/g. In this way, the first layer, having comparatively large carbon particles, ensures water retention, allowing for the maintenance of optimal humidification of the polymer electrolyte membrane. On the other hand, the second layer, having comparatively small carbon particles, ensures the appropriate amount of water loss, allowing for improved gas distribution. Note that the above specific surface area values were discovered by the inventors of the present invention to be those which are necessary for optimal effectiveness of the present invention.

Furthermore, this cathode-side gas diffusion layer that is made up of the first and second layers should have a water retention capacity ranging from 0.5 mg/cm² to 1.5 mg/cm² inclusive, while at the same time having a water retention density ranging from 0.05 g/cm³ to 0.5 g/cm³ inclusive. This ensures a water retention area, primarily involving the first layer, that can maintain optimal humidification conditions for the polymer electrolyte membrane.

In this case, "water retaining capacity" is defined as the weight of water retained per unit surface area after the object being measured is soaked and boiled for one hour in an ion-exchange water solution and is cooled to room temperature. "Unit surface area" refers to a unit surface area within the region in which a conductive water retention means is executed. And "water retention density" refers to the thickness of the region in which a conductive water retention means is executed and is a value obtained by dividing the above-mentioned water retention capacity. That is to say that water retention density is defined as the weight of water retained per volume within the region in which a conductive water retention means is executed.

### Brief Description of the Drawings

FIG. 1 is an assembly drawing of a cell unit that makes up the overall structure of the polymer electrolyte fuel cell of the present embodiment.
FIG. 2 is a sectional drawing showing the structure of the cell of the present embodiment.
FIG. 3 is a sectional drawing of the structure of the cell that shows how gas diffusion takes place within the gas diffusion layer (second layer).
FIG. 4 is a sectional drawing of the structure of the cell that shows how water is retained within the gas diffusion layer (first layer).
FIG. 5 is a graph showing the relationship between cell voltage and oxidizing agent usage rates.
FIG. 6 is a graph showing the changes in cell voltage that take place over time.
FIGs. 7(a) and 7(b) are sectional drawings showing the structure of a conventional cell.
FIG.7 (a) is a drawing that shows the arrangement of carbon fibers and carbon particles.
FIG. 7(b) is a drawing that shows the way in which excessive amounts of moisture are lost from the gas diffusion layer through evaporation.

### Best Mode for Carrying Out the Invention

### 1. Preferred Embodiment

The following describes a fuel cell (a polymer electrolyte fuel cell) that is an embodiment of the present invention, with reference to the attached figures.

### 1-1. Overall Structure of the Cell Unit

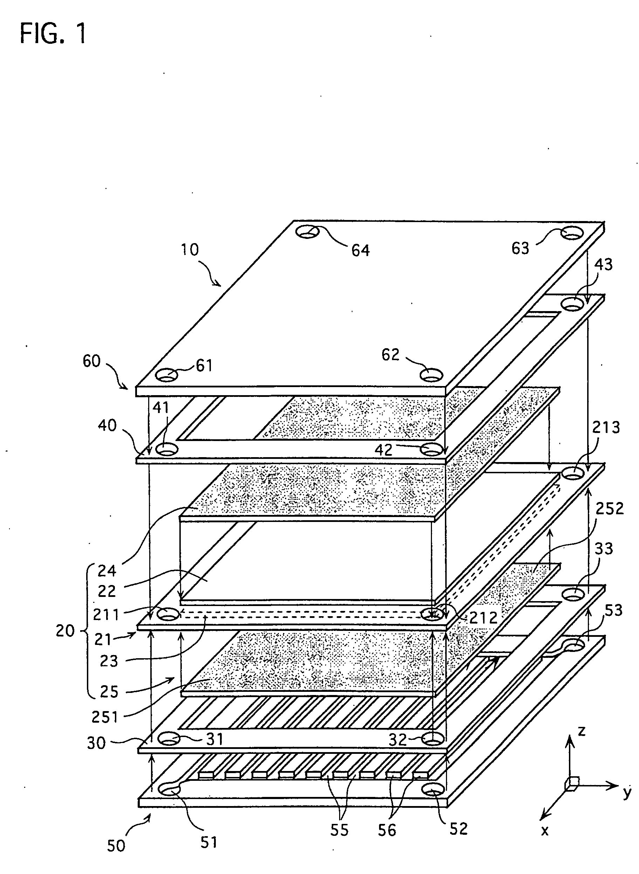

FIG. 1 is an assembly drawing of a cell unit 10, which makes up the overall structure of a polymer electrolyte fuel cell of the present embodiment. As indicated in the drawing, the entire body of cell unit 10 comprises a cell 20 situated between a cathode-side channel plate 60 and an anode-side channel plate 50.

Cell 20 comprises a polymer electrolyte membrane 21, electrodes 22 and 23 (cathode 22 and anode 23), a cathode-side gas diffusion layer 24, and an anode-side gas diffusion layer 25. Note that in FIG. 1 the anode 23 is situated beneath the polymer electrolyte membrane 21 and, therefore, is indicated by a dashed line.

The cathode-side channel plate 60 is layered together with the cathode 22 side of this cell 20, with a gasket 40 sandwiched therebetween. And the anode-side channel plate 50 is layered together with the anode 23 side, with a gasket 30 sandwiched therebetween. The cathode 22 and anode 23 are mold formed sheets that contain catalyst-carrying particles (platinum-carrying particles) and are sometimes called catalyst layers or reaction layers.

Gas diffusion layer 24 is situated between the cathode 22 and the cathode-side channel plate 60, and gas diffusion layer 25 is situated between the anode 23 and the anode-side channel plate 50. These gas diffusion layers maintain the flow of electricity between the electrodes 22 and 23 and the channel plates 50 and 60, so they are also called current collecting layers.

The anode-side channel plate 50 (in FIG. 1, the plate on the extreme bottom of the stack) is an injection-molded unit made up of phenolic resin, or some other resin material, mixed with carbon powder. On its surface that faces the anode-side gas diffusion layer 25, the channel plate 50 has ribs 56 that extend along the length of the plate in the direction of the x-axis. These ribs are incrementally spaced apart along the direction of the y-axis. This arrangement results in channels 55 that cause a fuel gas (pure hydrogen or a hydrogen-rich reformed gas) to flow along the length of the plate.

Note that although the description of this embodiment will include an explanation of an external humidification method wherein moisture is added to the fuel gas in order to supply moisture to the cell unit 10, the present invention is not limited to an external means. An internal humidification method may also be used.

In order to form an internal manifold, the polymer electrolyte membrane 21, the gaskets 30 and 40, the anode-side channel plate 50, and the cathode-side channel plate 60, are all designed with holes 61-64, 41-44, 211-214, 31-34, and 51-54 (44, 214, 34, and 53 are not shown in the diagram) in each of their four corners. Fuel gas is supplied to the channels 55 of the anode-side channel plate 50 through the holes 53, 33, 213, 43, and 63, and this gas is released through the holes 51, 31, 211, 41, and 61. Oxidizing gas is supplied to the channels of the cathode-side channel plate 60 through the holes 54, 34, 214, 44, and 64, and this gas is released through the holes 52, 32, 212, 42, and 62. The hole 64 is positioned to serve as the intake hole for the oxidizing gas that is to be supplied to the cathode-side gas diffusion layer 24.

Note that the cell unit 10 would actually be but one part of a multi-layered construction of a plurality of individual units (a cell stack) designed for high output of electricity. In such a design, the individual units are stacked one on top of another and fixed in place with divider plates therebetween, and the cell units at each extreme end of the assembly serve as end plates.

Since the outstanding characteristics of the embodiment of the present invention are primarily found within the composition of the cell 20, the following explanation will be that of the various structures within the cell 20, focusing on the polymer electrolyte membrane 21.

### 1-2. The Overall Structure of the Cell

The polymer electrolyte membrane 21 is an electrolyte membrane derived from a fluoric cation exchange resin such as perfluorocarbon sulfonate. In this design, the dimensions are set with the surface area at 144 cm², the length along the x-axis at 12 cm, the length along the y-axis at 12 cm, and the thickness in the direction of the z-axis at approximately 50 µm.

The electrode 22 (as well as 23) is a membrane electrode made of carbon black, and is somewhat smaller than the polymer electrolyte membrane 21 (the electrode surface area is 100 cm², the length along the x-axis is 10 cm, the length along the y-axis is 10 cm, and the thickness in the direction of the z-axis is 20 µm). The electrodes 22 and 23 are respectively layered together with the cathode-side gas diffusion layer 24 and the anode-side gas diffusion layer 25. Then these layers are centered and adhered to the respective main surfaces of the polymer electrolyte membrane 21 by means of a hot press.

Both of these gas diffusion layers 24 and 25 are constructed of a fibrous porous carbon paper to which a water-repelling resin (the copolymer tetrafluoroethylene-hexafluoropropylene (FEP)) is applied, and into which conductive carbon particles are charged.

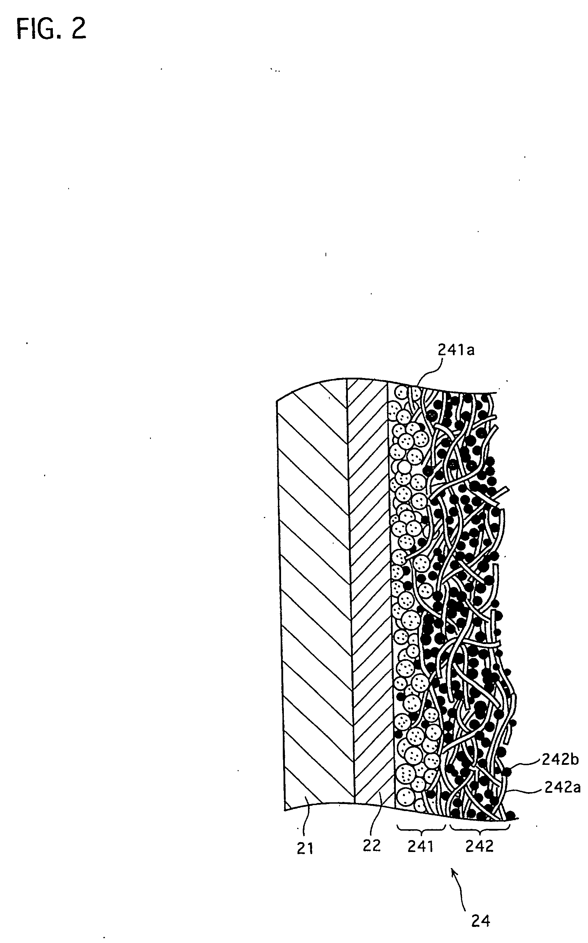

FIG. 2 is a partial sectional drawing of the cell showing the cathode-side gas diffusion layer 24. As indicated in this drawing, a special characteristic of the present embodiment is the presence of two separate layers, within the cathode-side gas diffusion layer, that are layered in the direction of the thickness of the cell (in the direction of the z-axis). In immediate contact with the main surface of the polymer electrolyte membrane 21 is the first layer 241, which has a smaller pore size (for example, less than 10 µm) in comparison to the second layer 242 (whose pore size could be, for example, 10 µm or more). Furthermore, the carbon particles 241b within the first layer 241 have an average specific surface area ranging from 100 cm² to 1000 cm²/g, inclusive, and the carbon particles 242a within the second layer 242 have an average specific surface area of less than 100 cm²/g.

In this way, the cathode-side gas diffusion layer of the present invention is made up of sub-layers stacked in the direction of the thickness of the cell. These sub-layers have differing pore size averages, and the specific surface areas of their carbon particles also differ. Due to this arrangement within the cathode-side gas diffusion layer 24, gas diffusibility is higher in the second layer 242 than in the first layer 241, and water retention is higher in the first layer 241 than in the second layer 242 (details to be explained later).

Additionally, the thickness of the gas diffusion layer 24 is 200 µm, the same as that of conventional designs. And in this case, the thickness of the first layer 241 within the gas diffusion layer is 10 µm and the thickness of the second layer 242 is 190 µm. However, these thicknesses serve only as examples,and the present invention is not limited to these measurements. The thickness may be adjusted as is appropriate, but, as constructed above, the thickness of the second layer 242 must be greater than that of the first layer 241 in order to achieve both effective water retention and effective gas diffusion.

Note that if the cathode-side gas diffusion layer 24 is too thick, the gas diffusibility will drop. Therefore, it is desirable to maintain the same thickness as in conventional designs (approximately 200 µm). Also, it is possible to have a design in which the first layer 241 is in partial or full contact with the oxidizing gas (that is, the second layer 242 could partially or totally be excluded) . However, in order to achieve both effective humidification within the polymer electrolyte membrane and effective oxidizing gas diffusibility, it is desirable to include the second layer 242 as laid out in the present embodiment.

### 1-3. Cell Construction Method

The following explanation is an example of a method for constructing the cell 20.

First, a fluoric cation exchange resin membrane (for instance, a Nafion 112 membrane made by Dupont with a thickness of 50 µm) is prepared according to the prescribed measurements to create the polymer electrolyte membrane. The polymer electrolyte membrane need not be limited to this fluoric material; a different cation exchange resin would be acceptable.

For the construction of the cathode-side gas diffusion layer, a carbon paper with a thickness of about 200 µm is impregnated with an alcohol dispersant containing 16 wt% water-repelling resin (FEP). Then it is baked at approximately 380°C for one hour.

The above-mentioned carbon paper can be a kerosene pitch type, a polyacrylonitrile type, or a cellulose type of carbon paper commonly available for purchase (an example would be TGP-H-060 made by Toray). The average pore size of the gas diffusion layer will vary depending on the size of the spaces between the carbon fibers, but if the above-mention carbon paper (Toray's GP-H-060) is used then a gas diffusion layer with an average pore size similar to that of the present embodiment (less than 10 µm for the first layer 241, and 10 µm or more for the second layer 242) can be made.

A fluoric resin is most suitable for the water-repelling resin to be used in the construction of the gas diffusion layer. Any of the following can be used: polytetrafluoroethylene (PTFE; for example, Teflon made by Dupont), perfluorocarbon sulfonate (for example, Nafion made by Dupont), the copolymer tetrafluoroethylene-perfluoroalkyl vinyl ether (PFA), the copolymer tetrafluoroethylene-hexafluoropropylene (FEP), polychlorotrifluoroethylene (PCTFE), polyvynilidene fluoride (PVDF), polyvynil fluoride (PVF), or the copolymer ethylene-tetrafluoroethylene (ETFE).

Once the water-repelling resin has been adhered to the carbon paper in the above fashion, the next step involves applying carbon particles whose average specific surface area is less than 100 m²/g to create what eventually becomes the second layer. An actual example of a material to be applied would be a slurry made by mixing carbon particles averaging 68 m²/g (such as Denka Carbon Black, made by Denki Kagaku Kogyo, with an average particle diameter of 42 nm) with a PTFE dispersion agent. (Such a slurry has a carbon particle-PTFE weight mixture ratio of 10:11.) Next, the slurry is evenly and smoothly applied to one of the carbon paper surfaces with a blade so that the particles penetrate the surface of the paper. Then the paper is left to dry at room temperature. With this method, the thickness of the second layer can be controlled by varying the amount of slurry that is applied with the blade.

The next step is the formation of the first layer. First, a slurry is prepared by mixing a PTFE dispersion agent with carbon particles whose average specific surface area is 100 m²/g or more. An actual example would be a slurry made by mixing the dispersion agent with carbon particles averaging 950 m²/g (such as Ketjen Black EC, made by AKZO, with an average particle diameter of 30 nm). This is then applied with a blade as a layer on top of the above-mentioned second layer that was applied to the surface of the carbon paper. Next, after being left to dry at room temperature, the carbon paper undergoes a heating process (for example, approximately 2 hours at 360°C). This completes the formation of the first and second layers within the cathode-side gas diffusion layer.

Note that the carbon particles measuring tens of nanometers in diameter are much smaller than the thickness of the fibers of the porous material. Although this is the case, the average pore diameter of the gas diffusion layer can be controlled by varying the amount of carbon particles applied.

Although it is acceptable to use carbon particles with an average specific surface area of 100 m²/g or larger for the first layer, it is actually desirable to keep the average specific surface area at or below 1000 m²/g in order to ensure proper carbon particle dispersion. Additionally, although it is acceptable to use carbon particles with an average specific surface area of less than 100 m²/g for the second layer, it is actually desirable to keep 50 m²/g as the lower limit for the average specific surface area in this case.

For the construction of the anode-side gas diffusion layer, carbon paper with a thickness of about 200 µm is impregnated with an alcohol dispersant containing 16 wt% water-repelling resin (FEP). Then it is baked at approximately 380°C for one hour. For both the carbon paper and the water-repelling resin, the same materials as those used for the above-mentioned cathode-side gas diffusion layer can be used.

Once both of the gas diffusion layers are formed, the catalyst layers (cathode and anode) can be formed. This is done by applying a slurry made up of platinum-carrying carbon (Pt/C), Nafion, and PTFE (these three substances having a weight ratio of 100:20:5) to a surface of each gas diffusion layer. These catalyst layers should be applied at a thickness of approximately 20 µm. Next, they are heat dried (for example, at 80°C for 60 minutes) to remove any solvent alcohols through evaporation.

All of the parts formed above are then layered in the following order: the anode-side gas diffusion layer, the anode, the polymer electrolyte membrane, the cathode, and, finally, the cathode-side gas diffusion layer. Then all of these layers are formed into one solid unit by means of a hot press (150°C, 50 kg/cm², 60 sec.). This completes the formation of cell 20. 1-4. Fuel Cell Operations and the Effects of the Present Embodiment

In the operation of a polymer electrolyte fuel cell such as this, a humidified hydrogen gas is used as the fuel gas supplied to the fuel cell and air is used as the oxidizing gas. When the fuel gas is supplied to the anode 23 side of the cell, its hydrogen changes to a proton form (H₂ → 2H⁺ + 2e⁻) and in its humidified state the gas migrates through the polymer electrolyte membrane 21 to the cathode 22 side. The oxygen molecules within the oxidizing gas that is supplied to the cathode side then combine with the protons that have migrated into the polymer electrolyte membrane to produce water (2H⁺ + 2e⁻ + 1/2O₂→ H₂O).

Due to the water produced from this chemical reaction (electricity-generating reaction) and the moisture added to the fuel gas that is supplied to the cell unit 10, humidification within the polymer electrolyte membrane 21 is achieved. As a result, its internal resistance is lowered and its ion conductivity is optimized. On the other hand, some moisture from the polymer electrolyte membrane 21 escapes through the electrodes 22 and 23 and is lost through evaporation into the oxidizing gas. The level of humidification within the polymer electrolyte membrane 21 is maintained through a balance of all three of these factors - the added moisture, the water produced by the electricity generating reaction, and evaporation into the oxidizing gas.

During the operation of conventional fuel cells, problems arise such as that indicated in above-mentioned FIG. 7 (b) . What is shown is a gas diffusion layer, made up of carbon cloth and carbon particles, that, due to evaporation into the oxidizing gas, loses excessive amounts of the water produced near the cathode. This occurs quite easily when only small amounts of moisture are added to the fuel or the oxidizing agent. When moisture evaporates into the gas in this manner and escapes from the reaction area near the cathode (the so-called "3 phase interface," where the electrolyte, catalysts, and air interact), the membrane's ion conductivity drops as does the electricity generating efficiency. Even when the oxidizing gas supplied to the cathode side is obtained from outside the fuel cell (that is, when comparatively small amounts of oxidizing agent are used), the flow rate of the oxidizing gas within the fuel cell becomes comparatively high. As a result, this oxidizing gas passes through the gas diffusion layer and the cathode, causing an increase in the amount of moisture removed from the polymer electrolyte membrane due to evaporation.

In addition to the above-mentioned problem of excessive evaporation of produced water, conventional designs are flawed in that excessive evaporation also occurs when water particles accompany the protons created during the electricity generating reaction and migrate along with those protons. This can also lead to a drop in electricity generating efficiency.

It is easily assumed that a solution to such problems would be to simply increase the density of the carbon fibers used in the gas diffusion layers and increase the number of carbon particles packed within the fibers. However, while decreasing the amount of water that evaporates after passing through the gas diffusion layer would result in improved water retentivity in the polymer electrolyte membrane, this increased density in the gas diffusion layer would not necessarily produce good results. The higher the density of the gas diffusion layer, the more difficult it becomes for even the oxidizing gas to pass through to reach the membrane. This would lead to a reduction in electricity generating efficiency. Indeed, with such an approach it is extremely difficult to optimize water retentivity within the polymer electrolyte while maintaining sufficient gas diffusibility.

As a solution to these problems, the present embodiment is designed with a layered construction for the cathode-side gas diffusion layer 24, wherein the first layer 241 optimizes water retentitivity, and the second layer 242 optimizes gas diffusibility. The following paragraphs explain how ideal water retention and ideal gas diffusion can both be achieved with this construction.

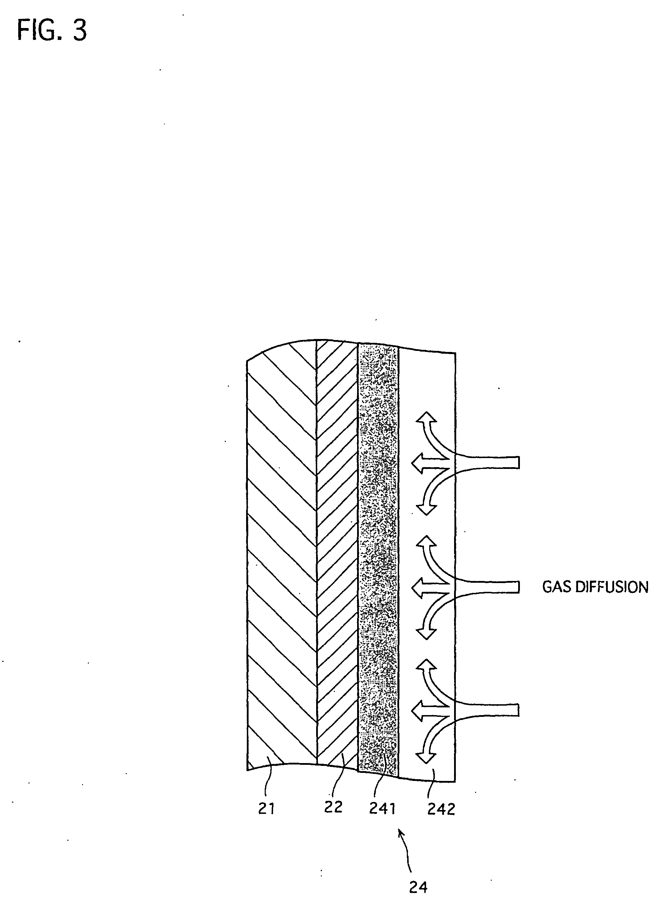

As shown in FIG. 3, a partial sectional drawing of the cell of the present embodiment, the average pore size of the second layer 242 is comparatively large at 10 µm or more, so the oxidizing gas is easily taken in. In addition to this pore characteristic, this second layer 242 is made up of carbon particles 242b, with a comparatively small average specific surface area (less than 100 m²/g), and carbon fibers 242a. With this arrangement, the oxidizing gas that is taken in spreads widely throughout the second layer 242 and an ideal diffusion takes place. (Note that in FIG. 3 the drawing of the gas diffusion layer is simplified in order to better illustrate the flow of the gas.)

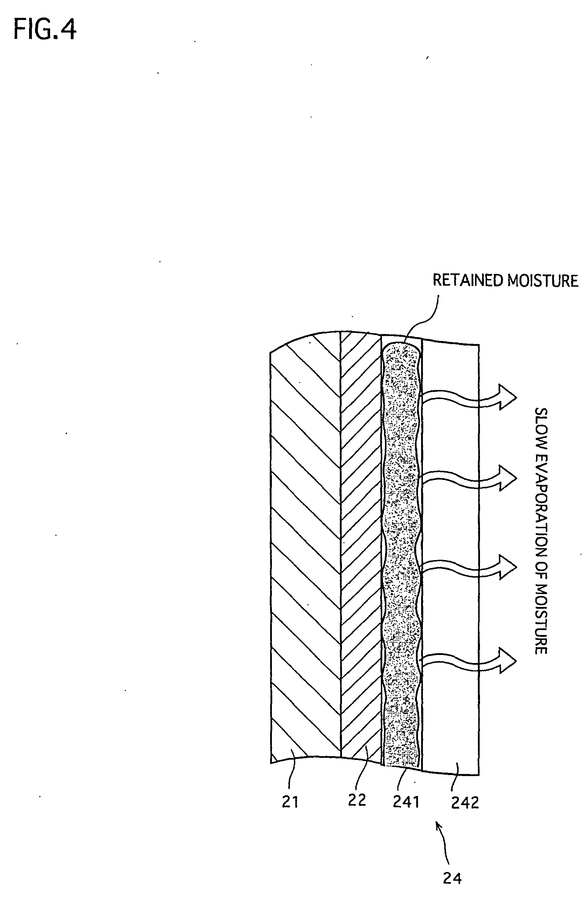

Next, as shown in FIG. 4, another partial sectional drawing of the cell of the present embodiment, the average pore size of the first layer 241 is comparatively small at less than 10 µ m. This causes the water produced during electricity generating reactions to soak in and spread throughout the first layer 241 by means of capillary action, allowing the water to accumulate in the layer over extended periods of time. This accumulated moisture serves to humidify the oxidizing gas that is taken into the gas diffusion layer 24 so that this gas contains plenty of moisture by the time it reaches the polymer electrolyte membrane 21. This design also limits the amount of moisture in the polymer electrolyte membrane 21 that is lost due to evaporation into the oxidizing gas. An additional feature of this first layer 241 that uses capillary action to optimize its water retaining properties is its uneven surface made up of carbon particles with a comparatively large average specific surface area (ranging from 100 m²/g to 1000 m²/g, inclusive). Finally, in the present embodiment this first layer 241 can ensure water retention while also allowing for proper gas diffusion because the thickness of the entire cathode-side gas diffusion layer 24 does not differ from that of conventional designs and the first layer 241 is thinner than the second layer 242.

When only small amounts of oxidizing gas are provided to the cathode side of a fuel cell from outside the cell (that is, when large amounts of oxidizing agent are used), the flow rate of this oxidizing gas within the fuel cell drops. This can easily lead to excessive accumulation of produced water within the cathode-side gas diffusion layer. However, in the present embodiment the first layer 241 is thinner than the second layer 242, limiting any increases in the water retention density and preventing any excessive build up of water within the gas diffusion layer.

As defined earlier, "water retention capacity" is the weight of water retained per unit surface area after the object being measured is soaked and boiled for one hour in an ion-exchange water solution and is cooled to room temperature. "Unit surface area" refers to a unit surface area within the region in which a conductive water retention means is executed. And "water retention density" refers to the thickness of the region in which a conductive water retention means is executed and is a value obtained by dividing the above-mentioned water retention capacity. That is to say that water retention density is defined as the weight of water retained per volume within the region in which a water retention means is executed.

In this way, the present embodiment overcomes the problems encountered in conventional designs by including two different layers, a layer (the first layer) for ensuring water retention and a layer (the second layer) for ensuring gas diffusibility, within the cathode-side gas diffusion layer.

### 2. Performance Comparison Experiments

### 2-1. The Construction of the Cells to be Tested

In order to confirm the effectiveness of the present invention, various cells were constructed to serve as working example cells, comparison example cells, and conventional example cells. They were constructed using the cell construction method of 1-3 above as well as construction methods indicated in TABLE 1 below. Note that in the table the unit used for "1^{st} Layer Application Amount" and "2^{nd} Layer Application Amount" is mg/cm².

**[TABLE 1]**

| | 1^{st} Layer Application Amt | 2^{nd} Layer Application Amt |
|---|---|---|
| Working Ex. 1 | 0.20 | 1.0 |
| Working Ex. 2 | 0.10 | 3.0 |
| Working Ex. 3 | 0.30 | 9.0 |
| Working Ex. 4 | 0.68 | 1.4 |
| Comparison Ex. 1 | 0.16 | 0.8 |
| Comparison Ex. 2 | 0.10 | 2.0 |
| Comparison Ex. 3 | 0.08 | 3.5 |
| Comparison Ex. 4 | 0.25 | 10.4 |
| Comparison Ex. 5 | 0.22 | 0.8 |
| Comparison Ex. 6 | 0.70 | 1.1 |
| Comparison Ex. 7 | 0.74 | 1.2 |
| Comparison Ex. 8 | 0.30 | 10.0 |
| Conventional Ex. | 2.80 | |

| | Water Retention Capacity (mg/cm²) | Water Retention Density (mg/cm³) |
|---|---|---|
| Working Ex. 1 | 0.5 | 0.50 |
| Working Ex. 2 | 0.5 | 0.05 |
| Working Ex. 3 | 1.5 | 0.05 |
| Working Ex. 4 | 1.5 | 0.50 |
| Comparison Ex. 1 | 0.4 | 0.50 |
| Comparison Ex. 2 | 0.4 | 0.05 |
| Comparison Ex. 3. | 0.5 | 0.04 |
| Comparison Ex. 4 | 1.5 | 0.04 |
| Comparison Ex. 5 | 0.5 | 0.60 |
| Comparison Ex. 6 | 1.5 | 0.60 |
| Comparison Ex. 7 | 1.6 | 0.50 |
| Comparison Ex. 8 | 1.6 | 0.05 |
| Conventional Ex. | 0.1 | 0.02 |

### 2-1-1. Construction of the Working Example Cells

The following is an explanation of the construction method used for the cathode-side gas diffusion layer.

A porous material (fibrous carbon, Toray's TGP-H-60, 200 µ m in thickness) was impregnated with an alcohol dispersant containing 16 wt% water-repelling resin (the copolymer tetrafluoroethylene-hexafluoropropylene, FEP), and then it was baked at approximately 380°C for one hour. This was followed by the application of a slurry prepared by mixing Denka Carbon Black (made by Denki Kagaku Kogyo) with a PTFE dispersion agent (this application formed the second layer). After this, a slurry prepared by mixing a PTFE dispersion agent with Ketjen Black EC (made by AKZO) was applied on top of the above application (forming the first layer) . Table 1 shows the actual amounts applied. Also, the water retention capacities and the water retention densities for the porous base material are shown in Table 1.

Following these guidelines, 4 types of working example cells were constructed.

### 2-1-2. Construction of the Comparison Example Cells

The cathode-side gas diffusion layers for the comparison example cells were constructed in the same manner as the working example cells, using a two-layer construction. The amount of slurry applied to the porous base material as well as the water retention capacities and the water retention densities of that material are all shown in Table 1.

Following these guidelines, 8 types of comparison example cells were constructed.

### 2-1-3. Construction of the Conventional Example Cells

The cathode-side gas diffusion layers for the conventional example cell were constructed using a simple single layer, not having separate first and second layers. Using the amounts indicated in Table 1, a slurry made by mixing Denka Black (made by Denki Kagaku Kogyo) and a PTFE dispersion agent was applied to both surfaces of the porous base material. Although this part of the construction varied from that of the working example cells, the same cathode-side porous base material was used, and the water retention capacity and the water retention density of this material was as indicated in Table 1. The end result of this construction was the same cell as shown in FIG. 3.

Following these guidelines, 1 type of conventional example cell was constructed.

### 2-2. Performance Comparison Experiments and Considerations

The working example cells, comparison example cells, and conventional example cells (13 cells in total) constructed in the above manner were measured for stability and other characteristics in regards to their oxidizing agent usage rates. The conditions under which these measurements took place are laid out below.

### 2-2-1. Experiments and Considerations Regarding Oxidizing Agent Usage Rates

In order to determine the changes that occur in cell voltage when oxidizing agent usage rates are changed, the relationship between oxidizing agent usage rates and cell voltage for working examples 1 through 4, comparison examples 1 through 4, and the conventional example were studied. The oxidizing agent usage rates were controlled by controlling the flow rate of the oxidizing gas supplied to the fuel cells.

The specific testing conditions are indicated below.
Electric Current Density: 400 mA/cm²
Fuel: hydrogen (fuel usage rate 50%, humidification temperature 80°C)
Oxidant: air (non-humidified)
Temperature: 70°C

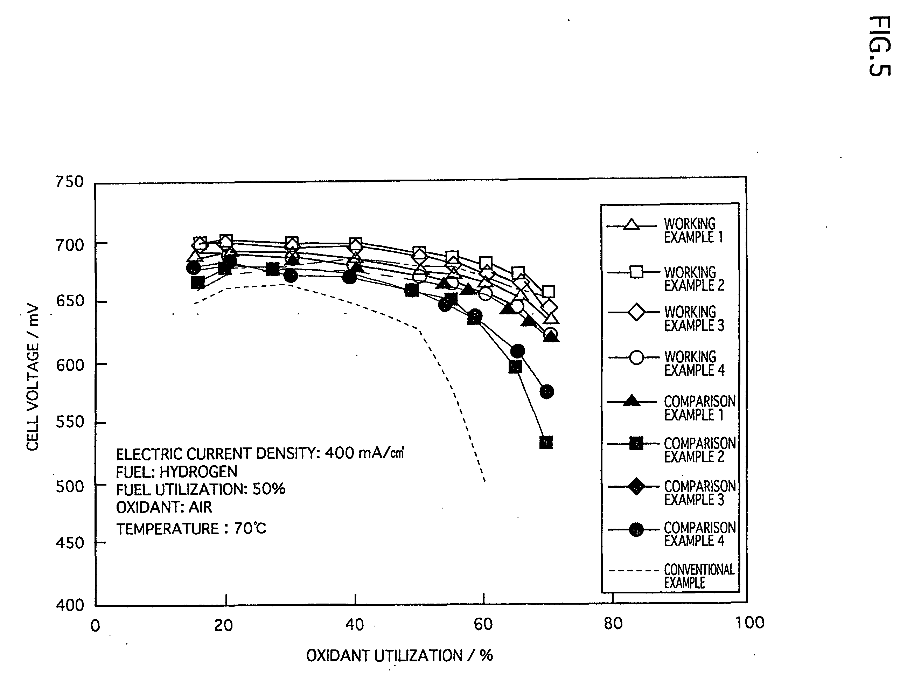

The results of this experiment are shown in FIG. 5. As shown in this graph, working example cells 1 through 4 were able to maintain higher and more stable voltages, under a wide range of conditions, in comparison to comparison example cells 1 through 4 and the conventional example cell. These higher and more stable voltages were maintained at times of low oxidizing agent usage rates (20 to 50%), when the oxidizing gas flow rate within the fuel cell was high and it was comparatively easy to lose the moisture within the polymer electrolyte membrane. And they were maintained at times of high oxidizing agent usage rates (50 to 70%), when the oxidizing gas flow rate within the fuel cell was low and it was comparatively easy for moisture within the polymer electrolyte membrane to increase (for condensation to accumulate).

Regarding the range of conditions in which there were low oxidizing agent usage rates and drying was more likely, the cause for the lower cell voltages for comparison example cells 1 and 2, as well as the conventional example cell, lies in the fact that these cells had small water retention capacities of 0.4 g/cm² or 0.1 g/cm². This gave them a greater likelihood of undergoing localized drying. In the case of the conventional example cell, the water retention density was also small, adding to the likelihood of drying.

Next, regarding the range of conditions in which there were high oxidizing agent usage rates and condensation was more likely to accumulate, the cause for the particularly low cell voltages for comparison examples cells 3 and 4, as well as the conventional example cell, lies in the fact that these cells had low water retention densities of 0.04 g/cm³ or 0.02 g/cm³. This led to a build up of condensation in the area of the gas diffusion layer, causing a drop in gas diffusibility. From these results, it is clear that working examples 1 through 4 optimized each particular oxidizing agent usage rate.

The water retention densities of working example cells 1 through 4 as well as comparison example cells 1 and 2 were quite high at 0.05 g/cm³ or 0.50 g/cm³. Due to this, they were able to actualize efficiency in generating electricity (specifically, ion conductivity) and could; therefore, produce the optimum levels of cell voltage shown in the diagram. Working example cells 1 through 4 deserve particular attention in that they had large water retention capacities ranging from 0.5 mg/cm² to 1.5 mg/cm²: When these characteristics were combined with the above-mentioned high water retention density, proper moisture could be maintained within the polymer electrolyte membrane while, at the same time, optimal gas diffusibility was maintained by preventing condensation near the gas diffusion layer from building up.

### 2-2-2. Experiments and Considerations Regarding Cell Endurance

Next, using the cells that were constructed for the experiments, measurements of cell endurance were conducted. The following are the conditions under which the testing took place.
Electric Current Density: 400 mA/cm²
Fuel: hydrogen (fuel usage rate 50%, humidification temperature 80°C)
Oxidant: air (oxidant utilization rate 50%)
Temperature: 70°C

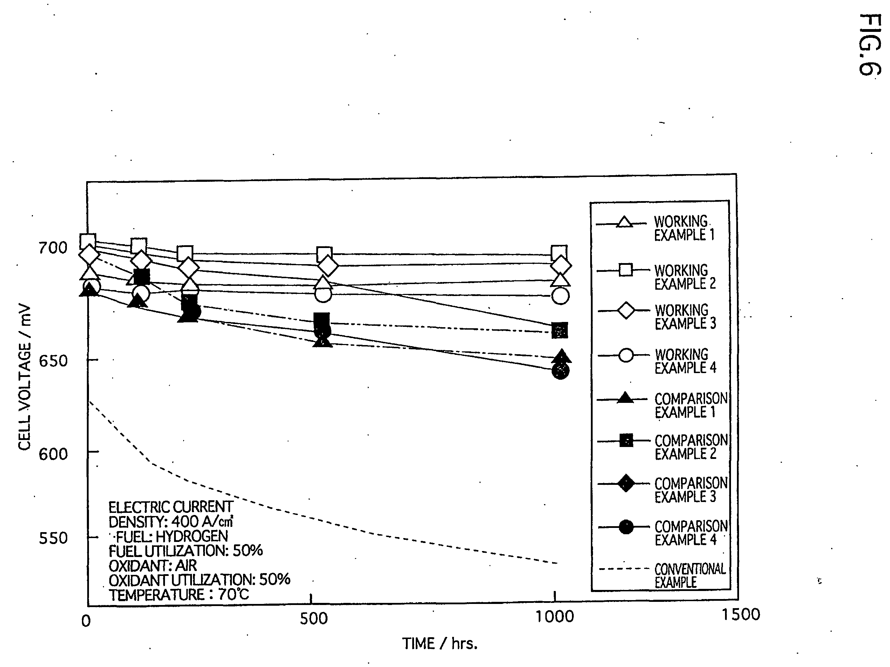

The results of this experiment are shown in FIG. 6. As indicated in this graph, each of working example cells 1 through 4 underwent minimal decreases in cell voltage in comparison to comparison example cells 5 through 8 and the conventional example cell. The reason for this difference lies in the fact that the cathode-side gas diffusion layers of working example cells 1 through 4 ensured both proper water retention and proper gas diffusibility, while comparison example cells 5 and 6 had excessive water retention densities and comparison example cells 7 and 8 had excessive water retention capacities. In comparison example cells 5 and 6 this caused an excess of retained water, primarily in the first layer. And in comparison example cells 7 and 8 this caused an excess of retained water in both the first and second layers. Both of these situations led to a decrease in gas diffusibility and a decrease in cell voltage.

Taking into consideration the above performance comparison experiments, it is clear that the cathode-side gas diffusion layer, made up of a first and second layer, is most effective with a water retention capacity ranging from 0.5 mg/cm² to 1.5 mg/cm², inclusive, and a water retention density ranging from 0.05 mg/cm³ to 0.5 mg/cm³, inclusive.

### 3. Other Considerations

Although the present embodiment was described as having a construction in which the oxidizing gas and the fuel gas flow orthogonally on the x- and y-axes, this cell unit is not limited to such a construction. For instance, it would be acceptable for the cell unit to have a parallel gas flow or a gas flow that varies from either of these.

Additionally, if the polymer electrolyte membrane is thinner than that of the present embodiment (especially if the thickness is less than 50 µm), the present invention can ensure ideal ion conductivity within the polymer electrolyte membrane by having an even smaller water retention capacity. This can lead to greater effectiveness in retaining moisture, which can, in turn, lead to further increases in electricity generation efficiency.

Also note that the construction of the cathode-side gas diffusion layer of the present invention is not limited to that of the present embodiment wherein the first layer makes contact with the cathode and the second layer is in immediate contact with the first layer. For instance, it is acceptable to have an intermediate layer between the first and second layers.

### Industrial Applicability

The present invention can be used as a small mobile electrical power source for automobiles and the like. It can also be used as an electrical power source for the household.

## Claims

1. A fuel cell that includes an electrolyte membrane having (a) a cathode and a gas diffusion layer arranged in the stated order on one surface of the electrolyte membrane, and (b) an anode and another gas diffusion layer arranged in the stated order on the other surface of the electrolyte membrane, wherein electricity is generated when an oxidizing gas is distributed along and passed through the cathode-side gas diffusion layer and a fuel gas is distributed along and passed through the anode-side gas diffusion layer,
the cathode-side gas diffusion layer comprising a first layer and a second layer, wherein
the first layer is in contact with the cathode,
the second layer is thicker than the first layer, and
the second layer is the layer along which the oxidizing gas is distributed and through which the oxidizing gas is passed.

2. The fuel cell of Claim 1, wherein
the first layer and second layer of the cathode-side gas diffusion layer have a plurality of pores, and
an average pore size of the second layer is greater than an average pore size of the first layer.

3. The fuel cell of Claim 1, wherein
the first layer and second layer of the cathode-side gas diffusion layer are formed by adhering conductive particles to a fibrous porous base material, and
the stated formation of the first layer and second layer further results in the formation of a plurality of pores throughout the first layer and the second layer.

4. The fuel cell of Claim 3, wherein
an average specific surface area of the conductive particles within the first layer of the cathode-side gas diffusion layer is greater than an average specific surface area of the conductive particles within the second layer.

5. The fuel cell of Claim 3, wherein
the fibrous porous base material is carbon paper and the conductive particles are carbon particles.

6. The fuel cell of Claim 5, wherein
the carbon particles of the first layer are made of
(i) furnace black or
(ii) furnace black mixed with acetylene black, expanded graphite, fibrous graphite, or any combination thereof, and
the carbon particles of the second layer are made of
(i) acetylene black or
(ii) acetylene black mixed with furnace black.

7. The fuel cell of Claim 6, wherein
the carbon particles of the first layer have an average specific surface area ranging from 100 m²/g to 1000 m²/g inclusive, and
the carbon particles of the second layer have an average specific surface area of less than 100 m²/g.

8. The fuel cell of Claim 1, wherein
the cathode-side gas diffusion layer, made up of the first and second layers, has a water retention capacity ranging from 0.5 mg/cm² to 1.5mg/cm² inclusive, and a water retention density ranging from 0.05 g/cm³ to 0.5 g/cm³ inclusive.

9. A fuel cell that includes an electrolyte membrane having (a) a cathode and a gas diffusion layer arranged in the stated order on one surface of the electrolyte membrane, and (b) an anode and another gas diffusion layer arranged in the stated order on the other surface of the electrolyte membrane, wherein electricity is generated when an oxidizing gas is distributed along and passed through the cathode-side gas diffusion layer and a fuel gas is distributed along and passed through the anode-side gas diffusion layer,
the cathode-side gas diffusion layer comprising 2 layers of varying water retentivity.

10. The fuel cell of Claim 9, wherein
the cathode-side gas diffusion layer is arranged so that, of the 2 layers of varying water retentivity, the layer with comparatively high water rententivity is in contact with the cathode.
